# EUROPEAN PATENT SPECIFICATION

(11) **EP 3 144 841 B1**
(45) Date of publication and mention of the grant of the patent: **27.03.2019**
(21) Application number: 15382450.3
(22) Date of filing: 16.09.2015
(51) Int. Cl.: G06F 21/85, G06F 21/44, G06F 21/62, G06F 21/34, G07C 9/00

(54) **SYSTEM, METHOD AND DEVICE FOR PREVENTING CYBER ATTACKS**
SYSTEM, VERFAHREN UND VORRICHTUNG ZUR VERHINDERUNG VON CYBERANGRIFFEN
SYSTÈME, PROCÉDÉ ET DISPOSITIF POUR EMPÊCHER DES CYBER ATTAQUES

(43) Date of publication of application: 22.03.2017
(73) Proprietor: Fundación Tecnalia Research & Innovation, 20009 San Sebastián, Guipúzcoa (ES)
(72) Inventor: GAMINO GARCÍA, Arkaitz, 20009 San Sebastián - Guipúzcoa (ES); EGUÍA ELEJABARRIETA, Iñaki, 20009 San Sebastián - Guipúzcoa (ES); LÓPEZ CARRERA, Ángel, 20009 San Sebastián - Guipúzcoa (ES); REGO FERNÁNDEZ, Ángel, 20009 San Sebastián - Guipúzcoa (ES); DEL RIO DEL RIO, Idoya, 20009 San Sebastián - Guipúzcoa (ES)
(74) Representative: Balder IP Law, S.L.

(56) References cited:
- EP-A1- 2 667 314
- WO-A1-2015/000967
- US-A1- 2014 019 775
- BO YANG ET AL: "TMSUI: A Trust Management Scheme of USB Storage Devices for Industrial Control Systems", INTERNATIONAL ASSOCIATION FOR CRYPTOLOGIC RESEARCH,, vol. 20150112:072703, 12 January 2015 (2015-01-12), pages 1-14, XP061017749, [retrieved on 2015-01-12]

## Description

### TECHNICAL FIELD

The present invention relates to the field of security in computer networks, in particular in industrial computer networks. More precisely, it relates to methods and systems for preventing attacks originated in data storage systems, such as USB devices.

### STATE OF THE ART

Industrial plants and operators have suffered from many types of attacks in the past. These attacks were carried out by gaining physical access to critical services, then performing sabotage, espionage or terrorist attacks. Traditional security measures have focused on physical perimeter solutions, pinpointing access control systems and intrusion detection systems as primary safeguarding tools.

Attacks have evolved after adoption by industrial and critical infrastructures of TCP/IP protocols and novel information and communication technologies. Embracing ICT (information and communications technology) implies improving productivity and efficiency, but it also entails acquiring technology-inherent vulnerabilities that could be exploited. In fact, well-known attacks, such as Stuxnet, exploit both physical and logical barriers. In particular, Stuxnet, the most devastating attack in the past decade, combined penetration of physical and logical barriers. Stuxnet and similar attacks performed in the last years have a common attack origin: USB access in operational industry resources.

Industry resources do not work at the same security level as corporate resources do, because the main requirement of industrial operation systems is availability rather than security. Industrial operation systems are frequently executed together with unpatched software and/or on outdated and archaic operating systems. This means that many devices and connections (such as servers, PLCs, RTUs, MTUs, BESs, lEDs, industrial protocols, etc.) do not resolve security vulnerabilities as they should. Industry is trying to solve this in two ways: (1) Isolating internal networks (operational networks) from the rest of the world (even from corporate networks); in this sense, new diode gateway solutions and industrial firewalls are used for such isolation; and (2) monitoring through SIEM (Security Information and Event Management) solutions, in order to try to react as soon as possible when an outbreak occurs.

Neither these solutions nor traditional antivirus solutions (since they cannot be deployed in the operational field) can avoid the above mentioned attacks.

WO2015/000967A1 discloses a device, system and method for securing transfer of data between a source portable data storage device and a destination computing system, which requires an intermediate external data storing means for transferring the data from the source portable data storage device to this intermediate external data storing means.

The publication by Bo Yang et al. "TMSUI: A Trust Management Scheme of USB Storage Devices for Industrial Control Systems", International Association for Cryptologic Research, 2015, discloses a system for protecting Industrial Control Systems against malicious software in USB storage devices. The system uses authentication and authorisation features, including white lists for authorized USB storage devices.

Therefore, there is a need for a system, method and device for preventing attacks originated in data storage systems, mainly in industrial networks.

### DESCRIPTION OF THE INVENTION

It is an object of the invention to provide a system, method and device for preventing cyberattacks. In particular, the system and method control and trace the handling of data storage systems, such as USB devices, associated to workers, operators and visitors mainly in industry, and prevent attacks originated in those data storage systems. The method and system of the invention permit to control the use of data storage devices any system, but in particular in industrial operation systems, in which an attack leading to the denial of essential services (such as electricity, gas, water...) could produce a major impact.

According to an aspect of the present invention, there is provided a security system for preventing cyberattacks in a system comprising a plurality of computer devices. The security system comprises: at least one control device comprising: means for authenticating a user trying to physically access a zone comprising at least one computer device of the plurality of computer devices; means for authenticating a data storage device the user intends to insert in at least one of those computer devices and for verifying, cleaning and encrypting the content of the data storage device; means for, if the data storage device carried by the user is a private data storage device, providing a corporate data storage device, wherein the provided corporate data storage device comprises a copy of the verified, cleaned and encrypted content originally stored in the private data storage device. The security system also comprises a software agent installed in at least one of the plurality of computer devices. The software agent is configured: for detecting if a data storage device inserted into a port of the computer device is a private one or a corporate one; for, in the event of a private one, denying the data storage device access to that computer device; and for, in the event of a corporate one, checking if its content has been verified, cleaned and encrypted by a control device and, in the event it has, decrypting the content of the corporate data storage device, thus permitting the computer device to read or run that content.

The data storage device can be a USB drive, or a mini USB drive, or a micro USB drive, or a DVD, or a CD, or a SD card, or a mini SD card or a micro SD card, or a portable hard disk, or any other format of data storage system.

In a particular embodiment, the means for authenticating a user comprises means for reading an access card or an electronic identifier of the user, wherein the means for reading a card or an electronic identifier comprises a slot for inserting a card or a wireless reader for wirelessly detecting the information registered in the card or in the electronic identifier.

In a preferred embodiment, the security system further comprises at least one adapter comprising a first port configured to receive an external data storage device and a second port configured to be plugged in a corresponding port of one computer device of the plurality of computer devices. The adapter provides a physical interface between the external data storage device and the computer device while it isolates the computer device from the external data storage device. More preferably, the adapter comprises means for detecting if the data storage device inserted into the port of the adapter is a private one or a corporate one; for, in the event of a private one, denying the data storage device access to that computer device; and for, in the event of a corporate one, checking if its content has been verified, cleaned and encrypted by a control device and, in the event it has, decrypting the content of the data storage device, thus permitting the computer device to read or run that content.

In another aspect of the invention, it is provided a method for preventing cyberattacks in a system comprising a plurality of computer devices. The method comprises: in at least one control device: authenticating a user trying to physically access a zone comprising at least part of the system comprising a plurality of computer devices; authenticating a data storage device the user intends to insert in at least one of those computer devices and verifying, cleaning and encrypting the content of the data storage device, wherein the data storage device is either a corporate one or a private one; if the data storage device carried by the user is a private data storage device, providing a corporate data storage device, wherein the provided corporate data storage device comprises a copy of the verified, cleaned and encrypted content originally stored in the private data storage device. The method also comprises: in at least one of the plurality of computer devices: detecting if a data storage device inserted into a port of the computer device is a private one or a corporate one; if it is a private one, denying the data storage device access to that computer device; and if it is a corporate one, checking if its content has been verified, cleaned and encrypted by a control device and, in the event it has, decrypting the content of the data storage device, thus permitting the computer device to read or run that content.

In a particular embodiment, the stage of user authentication comprises reading an access card or an electronic identifier of the user, wherein the card or electronic identifier reading is performed either by inserting that card into a slot or by wirelessly detecting the information registered in the card or in the electronic identifier; and the stage of authentication of the data storage device comprises comparing an identifier associated to the data storage device with the identifiers comprised in a list of identifiers corresponding to respective corporate data storage devices.

In a particular embodiment, the method comprises, after authenticating the user and authenticating the data storage device: copying the content of the data storage device, either a corporate one or a private one, in memory means comprised in the at least one control device; eliminating from the copied content any malware; verifying that the copied content belongs to a list of allowed files or allowed file extensions; creating a file within the memory means, that file comprising the malware-free content that belongs to the list of allowed files; copying the created file into the corporate data storage device.

More particularly, prior to copying the created file into the corporate data storage device, the method performs: symmetrically encrypting the file; making a hash for checking its integrity; and signing the encrypted and hashed file with a private key.

In a particular embodiment, the stage of detecting in at least one of the plurality of computer devices if the data storage device inserted into a port of said computer device is a private one or a corporate one comprises: comparing an identifier of the inserted data storage device with each identifier of a list of identifiers corresponding to corporate data storage devices.

The data storage device can be a USB drive, or a mini USB drive, or a micro USB drive, or a DVD, or a CD, or a SD card, or a mini SD card or a micro SD card, or a portable hard disk, or any other format of data storage system.

In a particular embodiment, the method further comprises, in at least one of the plurality of computer devices: plugging in a port of the at least one computer device an adapter comprising a first port configured to receive an external data storage device. The adapter is plugged into the port of the computer device through a port of the adapter. The method also comprises plugging into the first port of the adapter an external data storage device; and providing by the adapter a physical interface between the external data storage device and the computer device while isolating the computer device from the external data storage device.

More particularly, the method further comprises in the adapter: detecting if the data storage device inserted into the port of the adapter is a private one or a corporate one; if it is a private one, denying the data storage device access to that computer device; and if it is a corporate one, checking if its content has been verified, cleaned and encrypted by a control device and, in the event it has, decrypting the content of the data storage device, thus permitting the computer device to read or run that content. Additional advantages and features of the invention will become apparent from the detail description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a scheme of the architecture of the security system according to an embodiment of the invention.
Figures 2A and 2B show two views of a scheme of a control device according to a particular embodiment of the invention.
Figure 3 shows a scheme of the architecture of an adapter according to a possible embodiment of the invention.
Figure 4 shows a flowchart of a process carried out at an adapter according to the invention prior to permitting the content of an external data storage device to be run on a critical device.
Figures 5 to 10 show different stages of the architecture of an adapter according to a possible embodiment of the invention.

### DESCRIPTION OF A WAY OF CARRYING OUT THE INVENTION

In this text, the term "comprises" and its derivations (such as "comprising", etc.) should not be understood in an excluding sense, that is, these terms should not be interpreted as excluding the possibility that what is described and defined may include further elements, steps, etc.

In the context of the present invention, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially".

The following description is not to be taken in a limiting sense but is given solely for the purpose of describing the broad principles of the invention. Next embodiments of the invention will be described by way of example, with reference to the above-mentioned drawings showing apparatuses and results according to the invention.

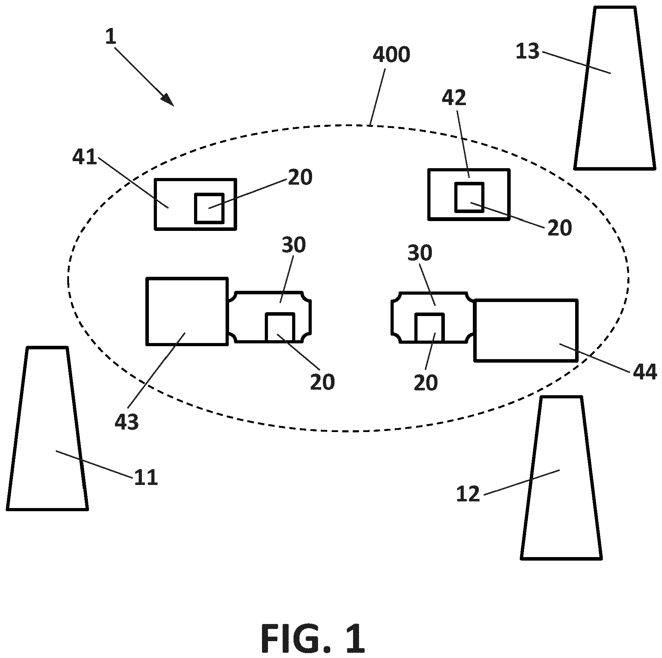

Figure 1 shows a scheme of the architecture of a security system 1 according to an embodiment of the invention. The security system is associated to an industrial area having geographically dispersed operation/control computers or workstations (industrial devices) 41 42 43 44 forming a critical system 400. A critical system is a system encompassing computers, workstations and/or other devices whose failure may cause severe damage, such as injury or death to human beings. Such systems typically control a process on the physical world. The security system 1 comprises a plurality of checkpoints, control devices or access devices 11 12 13 (hereinafter referred to as control devices) that serve as entry points to the industrial area comprising that critical system 400. Control devices 11 12 13 are devices or appliances at which employees or visitors of the area (for example, industrial system) must identify themselves and register any external data storage systems they plan to use inside the industrial facility. Non-limiting examples of external data storage systems are any input/output data storage systems, such as USB drives, such as USB drives, mini USB drives or micro USB drives, DVDs, CDs, SD (Secure Digital) cards, such as mini SD cards or micro SD cards, portable hard disks or any other format of data storage system that could pose any digital storage corpuscle. The external data storage systems can not only be potentially plugged into the computers forming the critical system 400, but can also be inserted in other electronic devices, such as smart phones, smart watches, photograph cameras, video cameras, among others. A server (not shown) controls the whole system. The security system is managed by a final user who is eventually managing the operation alerts.

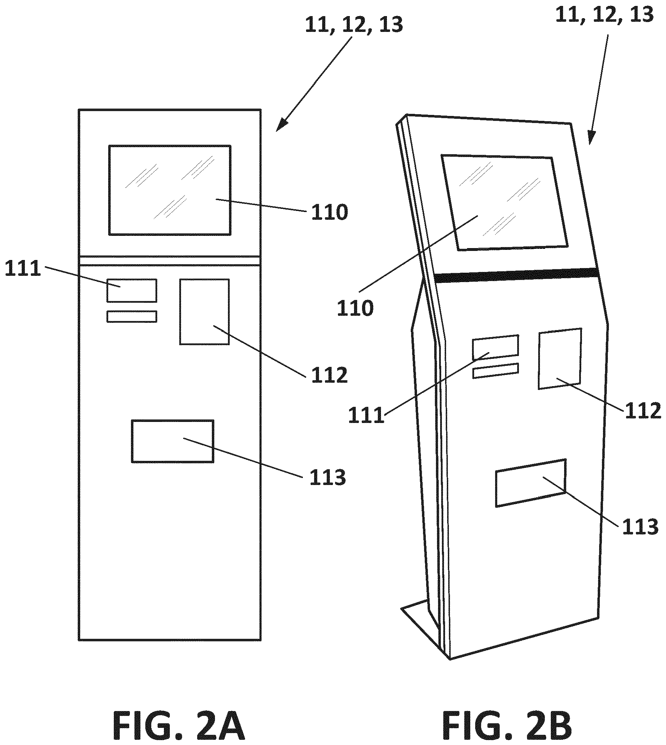

In a particular embodiment, the control device 11 12 13 is a cabinet or box, for example as illustrated in figures 2A and 2B. The control device 11 12 13 comprises computer means including memory means and processing means configured for, among other functionalities, authenticating users (visitors, employees...), detecting malware and cleaning files from malware. Authentication can be performed by reading an access card or employee card (visitors normally carry a visitors access card, while employees carry a corporative employee card or id card) or any other electronic identifier carried by a device associated to the user, such as a smart phone, a PDA or a watch. Authentication can be performed in any conventional way, such as typing username and password or inserting a card (access card or id card) into a slot or by wireless detection of the information registered in the card or device carrying an electronic identifier. To this end, the control device 11 12 13 comprises means 112 for authentication, such as a NFC (Near Field Communication) system, illustrated in the exemplary implementation of figure 2A, through which the user can be identified by approaching an ID card or device carrying an electronic identifier to the NFC system. The control device 11 12 13 is equipped with a plurality of different ports, each configured to receive a different data storage system, such as the ones already enumerated. Figure 2A shows two exemplary ports, both generally referred to as 111, configured to receive respective different types of data storage systems or devices. As will be explained later, through one of these ports 111, once authenticated the user can insert the data storage system he plans to use inside the industrial facility into a corresponding port 111. For example, a user is requested (by the security system) to insert such data storage system by displaying a message on a visual display 110 or by emitting an audible signal or speaker (not illustrated). In a particular embodiment, the data storage system is a USB drive. The control device 11 12 13 also comprises means 113 for expending a corporate data storage device. In a particular embodiment, the corporate data storage device is a corporate USB flash drive. When the data storage device that the user (i.e. visitor or employee) intends to use within the industrial facility is a private one (in opposition to a corporate one), the control device 11 12 13, after a stage of software verification and cleaning that will be explained in detail later, provides the user with a corporate data storage device, free of malware and of non-allowed software.

The control device 11 12 13 has verification means configured for verifying that the software (data in general) stored on the data storage system is clean and free of malware. Possible malware or infections will be cleaned. Then, a corporate data storage device (in a particular embodiment, a USB drive or USB flash drive), housed in the control device 11 12 13, is prepared by the system. The corporate data storage device only contains the verified software and data (cleaned software and data) from the original external data storage device. This corporate or internal data storage device is linked or associated to its bearer through an identification of the user already extracted in the authentication stage. Once the user is authenticated, the unique ID of that user is linked to the ID of the corporate USB provided by the control device 11 12 13. The contents of this corporate data storage device are encrypted both asymmetrically and symmetrically. In sum, authentication and authorization mechanisms are performed in order to guarantee a correct access control. These mechanisms are explained in detail later in this description.

In order to achieve a coherent and distributed security solution, the security system 1 also comprises a plurality of software agents 20 installed in the critical devices (computer systems or computer devices) 41 42 43 44 and/or in adapters (interface devices) 30 (to be described), which are devices comprising software agents. A software agent is software installed in a device or workstation in order to protect that device or workstation against unauthorized data storage devices, such as USB drives. The software comprised in the software agent is a native SO program that denies operation of data storage devices (such as USB operation) unless those data storage devices are recognized by the corporation. The software agents 20 and the adapters 30 are deployed in the industrial devices 41 42 43 44 comprised in the industrial plant. These agents and/or adapters control and ensure that only corporate data storage devices, such as corporate USB drives, encrypted by a determined control device 11 12 13 and linked to a specific registered bearer, as will be explained next, will have access to critical devices 41 42 43 44 in the industrial operation system.

The area of the industrial facility covered by the security system 1, that is to say, the area having critical devices (computer systems) 41 42 43 44 which are controlled/protected by the control devices 11 12 13 and the software agents 20 and/or adapters 30 associated to the critical devices 41 42 43 44, is called "disinfected zone" or "white zone", in the sense that this zone is free of malware originated in external data storage systems. In other words, a "white zone" is a logical area which is free of virus or malicious executable code coming from data storage devices in a particular physical area. This area can encompass several critical devices and workstations within it. Employees and visitors accessing this zone need to assume particular rules in order to operate inside the industrial plant. Employees and visitors access this zone after identifying themselves and performing some security tasks at one control device 11 12 13, as will be explained next.

Next, the actions to be performed in a control device 11 12 13 when a user wants to access a "white zone" with an external data storage device (with the intention of inserting /reading /copying /executing the external data storage device in a critical device 41 42 43 44) are described in detailed. As already stated, a control device 11 12 13 is a device or appliance aimed at cleaning an external data storage device in terms of software viruses and malware and at verifying that only valid software (software included in a "white list") coming from an external data storage device is allowed to enter a "white zone". A set of steps or stages have to be performed in the control device 11 12 13.

First, an authentication/verification stage is required. The control device 11 12 13 comprises means for authenticating users (visitors, employees...). This authentication is based on software means. A user is authenticated with the system (at a control device 11 12 13) by means of any authentication process. Authentication can be performed by typing username/password or reading an access card or employee card or any other electronic identifier carried or integrated in a portable device (smart phone, smart watch, PDA...) at means for authentication 112 comprised in the control device 11 12 13 (visitors normally carry a visitors access card, while employees carry a corporative employee card or id card or a different electronic identifier as already mentioned). Authentication can be performed in any conventional way, such as through a basic user/password authentication method (for example to be typed by the user on a touch display or keyboard), or by means of an id card or access card or electronic identifier (either by inserting it into a slot or by wireless detection of the information registered in the card or electronic identifier). In particular environments or scenarios implying maximum security requirements, the authentication stage performed by the control device 11 12 13 involves a two-factor authentication. Two-factor authentication is a security process in which the user provides two means of identification, one of which is typically a physical token, such as an id card or electronic identifier, and the other one is typically something memorized, such as a username/password. In other words, the two-factor authentication involves a combination of reading an access token plus typing a kind of code. A non-limiting example of current technology for transmitting the authentication possession token (such as id card or employee card or electronic identifier) is via NFC (Near Field Communication). In the embodiment illustrated in figure 2A, the control device 11 12 13 preferably comprises a NFC reader. The NFC reader gets a unique identifier (such as the UUID (universally unique identifier)) of the id card or electronic identifier and sends it to a server 50 (not illustrated), wherein the user is authenticated against a directory. The directory can be a local database or a LDAP (Lightweight Directory Access Protocol) server.

This authentication stage requires also that the external data storage device carried by the user be authenticated as well. The external data storage device carried by the user is then plugged into a corresponding port or slot of the control device 11 12 13. In a particular embodiment, the external data storage device is incorporated in the card (i.e. employee card) or device carrying an electronic identifier. In this case, the external data storage device is a corporate one. In a more general situation, the external data storage device carried by the user can be either a corporate data storage device (for example because the user is an employee) or a non-corporate data storage device (that is to say, a private device owned by either a visitor or an employee). To perform this authentication of the external data storage device, the unique identifier (for example UUID) of the external data storage device is compared with a list of unique identifiers corresponding to respective corporate storage devices. This comparison can be performed either locally (at the control device 11 12 13) or remotely (at the server 50). Afterwards, there are three possible scenarios:
(1) If the external data storage device is a corporate one (and therefore its unique identifier has been correctly matched with one of the list of corporate data storage devices), the control device 11 12 13 will not expend a corporate one because the user has already one. The control device 11 12 13 will perform, however, several security tasks that will be explained next (scenario 1).
(2) If the external data storage device is a non-corporate one and the user role indicates (this can be indicated for example during the user authentication) that he is entitled to be provided with a corporate USB, the control device 11 12 13 will provide a corporate one once additional security tasks have been performed on the software stored in the external data storage device, as will be explained next (scenario 2).
(3) If the external data storage device is a non-corporate one and the user role indicates (preferably during an authentication stage) that he is not entitled to be provided a corporate data storage device, the control device 11 12 13 will not provide a corporate one and no additional security tasks will be performed.

Both in scenarios (1) and (2), once the control device 11 12 13 is aware of the fact that the external data storage device is plugged, the following is done. Preferably, a temporary file folder, normally used for the cleaning procedure in the computer means of the control device is deleted. The temporary file folder is preferably deleted in order to create a new one in which to perform the cleaning and software verification actions. Then, a copy process begins. Files from the external data storage device (such as USB drive, either a corporate one (scenario (1)) or a private one (scenario (2))) are copied to a newly created temporary file in the temporary file folder in the control device 11 12 13. Once copied, these files are cleaned by an external antivirus in a conventional way. In the context of the invention, "cleaning" means that an antimalware service cleans/eliminates the malware within the set of selected files (copied files from the storage device). Conventional antimalware technology detection and cleaning processes are performed by using known signatures and patterns. Apart from cleaning infected files or software, some verification is carried out, in which it is verified if copied files belong to or are on a list ("white list") comprising correct or allowed files according to the organization security policy. For example, the list of allowed files can comprise an exhaustive list of possible permitted extensions for the files. In other words, verification is a process that enables the entrance of only well-known files and applications. In a particular embodiment, cleaning and verifying processes are performed by a service on the cloud. Once these two processes (cleaning and verification) are ended, all files on the temporary folder are compressed (i.e. zipped) in a single compressed file (still within the memory means comprised in the control device) and encrypted. The cryptography process encompasses these stages:
- the compressed file (i.e. zip file) is encrypted symmetrically with a secret to keep confidentiality;
- a hash is made for checking its integrity and signed with checkpoint's private key (private key of the control device 11 12 13);
- a list of corporate data storage devices is encrypted symmetrically with a secret or paraphrase.

Then, a second stage starts. In scenario (2), a corporate data storage device is provided by the control device 11 12 13. The user then mounts (plugs) the corporate data storage device into a port of the control device 11 12 13 in order to copy the previously generated files (stored in the created temporary file folder) plus the public key of the checkpoint (control device 11 12 13). The generation of public keys and private keys is out of the scope of the present invention. The four generated files (encrypted original content, encrypted hash file, encrypted list of corporate data storage devices and public key) are copied to the corporate data storage device. Then, in a preferred embodiment, once the four files are copied in the corporate data storage device, the temporary folder in the control device 11 12 13 is deleted through a secure deletion process. Prior to copying the four files in the corporate data storage device by the control device 11 12 13, a secure deletion of the prior stored content of the corporate data storage device to be provided in the control device 11 12 13 is performed.

After this process, the corporate data storage device provided by the control device 11 12 13 comprises four files:
- a file comprising the compressed and encrypted content of the original data storage device inserted in the control device 11 12 13 by the user;
- an encrypted list of the serial numbers of all valid corporate data storage devices within the "white zone"; this list will allow a software agent to check, when the corporate device is inserted in a critical device, if the inserted device is a valid corporate data storage device or not;
- a digital signed file with the hash value of the encrypted content, in order to check if the content created by the control device that provided the corporate data storage device has been modified or not (integrity); and
- the public key needed to read the signed data and verify the integrity of the encrypted content.

Once this process at the control device is fulfilled, the user (visitor, employee...) can use the contents that have been transferred from his private data storage device to the corporate one, in any critical device (computer...) belonging to the "white zone".

In scenario (1), in which the user brings with him/her a corporate data storage device, the control device 11 12 13 does not provide a corporate data storage device. The four generated files (encrypted original content, encrypted hash file, encrypted list of corporate data storage devices and public key) stored in a temporary folder in the control device 11 12 13 are copied to the corporate data storage device. Then, in a preferred embodiment, once the four files are copied in the corporate data storage device, the temporary folder in the control device 11 12 13 is deleted through a secure deletion process. Prior to copying the four files in the corporate data storage device by the control device 11 12 13, a secure deletion of the prior stored content of the corporate data storage device to be provided in the control device 11 12 13 is performed.

After this process in scenario (1), the corporate data storage device carried by the user has the same contents as described in scenario (2).

Once this process at the control device is fulfilled, the user (visitor, employee...) can use the contents stored in the corporate data storage device, in any critical device (computer...) belonging to the "white zone".

In the "white zone" (comprising critical devices 41 42 43 44) in the industrial facility, there can be two types of critical devices or critical stations: a first type of devices in which it is permitted to plug in external data storage devices (referred to in figure 1 as 41 42); in this first type of de devices 41 42 it is permitted to install software provided the security requirements already explained have been fulfilled; and a second type of devices in which it is absolutely forbidden to plug in any external data storage device (except the already mentioned adapters 30, which are authorized because they belong to the security system 1). This second type of devices is referred to in figure 1 as 43 44. In this second type of critical devices 43 44 it is totally forbidden to install software.

In particular, a user within a "white zone" can carry a data storage device (i.e. USB drive) and that data storage device can be either a corporate data storage device or a private data storage device. When the user inserts the data storage device in a suitable port of a critical device (i.e. work station) 41 42 of the first type, a software agent 20 installed in that critical device (computer device) identifies an identifier of the data storage device (for example, its UUID or its serial number) and compares the unique identifier of the data storage device with a list of permitted identifiers. The software agent 20 has access to the list of permitted identifiers either because it has a remote connection with the server 50 (for example an internet connection via web) or by checking the list stored in a file in the data storage device. If the data storage device is a private one, the comparison does not match with any identifiers in the list. The private data storage device is automatically rejected from the critical device 41 42. Any booting malware that could potentially be installed in the data storage device is unable to reach/be executed/run in the critical device 41 42.

If, on the contrary, the data storage device is a corporate one (provided by a control device), the comparison of the identifier of the external device matches with one identifier in the list. This is done in an inverse way with respect to the process carried out in the checkpoint:
- the public key is extracted from the data storage device and it is verified whether or not the content has been signed by the control device. Thus it is also confirmed that its content has been verified by the control device;
- the integrity is checked by completing a hash algorithm. This means that the inverse hash has to be correct in order to give green light to go on with the process;
- the file with the original content is decrypted and unzipped;
- if all previous steps are correct, a layout/window in a display/screen comprised in the critical device 41 42 is open, showing the content of the corporate data storage device;
- if one of the previous steps is not valid, the corporate data storage device is automatically rejected from the critical device 41 42.

When the user wants to insert a data storage device in a suitable port 436 of a critical device (i.e. work station) 43 44 of the second type, that is to say, a critical device in which it is totally forbidden to install/connect/plug any external data storage device, an adapter, interface device or smart data storage device 30 is required. From now on in this text, the term "adapter" is used to refer to such device 30. The adapter 30 is the only data storage device which is permitted to be plugged into a port of the critical device.

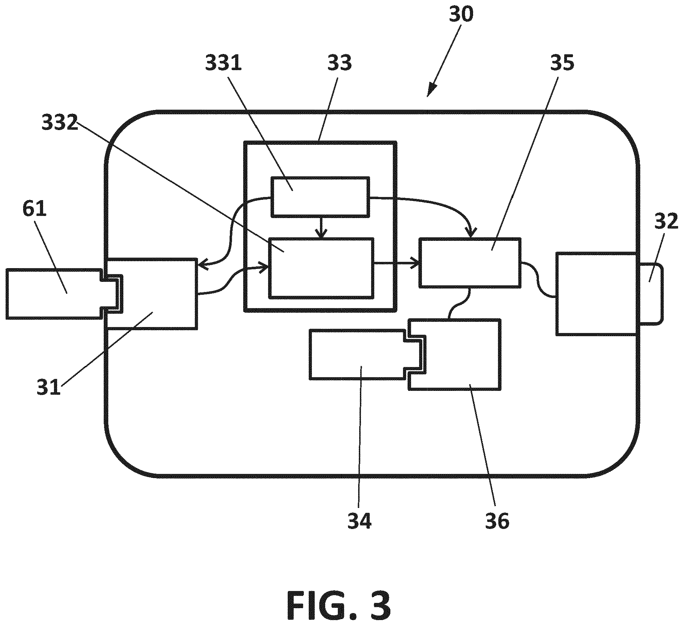

Adapter 30 is an external device to be plugged in a critical device 43 44 of the second type. In its outer appearance, adapter 30 comprises a first port or socket 31 configured to receive a corresponding external data storage device (that is to say, an external data storage device of the type suitable to be inserted in said port or socket 31) and a second port or socket 32 configured to be plugged into a corresponding port 436 of the critical device 43 44. In a particular implementation, the ports or sockets are USB ports or sockets, that is to say, configured to receive/plug (as the case may be) a USB drive. In this case, adapter 30 can be considered a smart USB drive. In sum, adapter 30 has one physical entry (socket or port 31) and one physical output (socket or port 32) configured to be connected to a corresponding port 436 of a critical device, to which data are to be transferred. In other words, adapter 30 permits a user to plug an external data storage device in the first port 31 and, because the second port 32 of the adapter 30 is plugged in the corresponding port 436 of the critical device, the software verification can be done at the adapter 30, which preferably comprises a software agent similar to the software agent 20 installed in the critical devices 41 42 of the first type, thus keeping the critical device 43 44 isolated from the external data storage device. In short, adapter 30 is an intelligent data storage system drive, it is connected as a data storage system drive and it behaves like a data storage system drive. Figure 3 shows a scheme of the architecture of an adapter 30 according to a possible embodiment of the invention. Next, it is explained how this works.

Adapter 30 comprises hardware and software components or elements. It comprises the following functional components: control means 33, internal data storage means 34 and isolating means or switching means 35.

Control means 33 is a functional component associated to several hardware elements, such as at least one microprocessor or CPU 331 and at least one memory 332 (this at least one memory 332 can be for example implemented by means of a volatile memory and a permanent memory). Control means 33 can be implemented for example as any computer-like device, such as a pc box or a microcomputer. It comprises an Operating System and a software application configured to control the information to be passed to an external machine or destination machine (critical device 43 44). Internal data storage means 34 (also referred to as auxiliary data storage means) can be any data storage system, such as a USB drive, mini USB drive, micro USB drive, SD (Secure Digital) card, mini SD card or micro SD card. In a preferred embodiment, it is a USB drive. Adapter 30 also comprises an internal port or socket 36 configured to receive the internal data storage means 34. In the particular example in which the internal data storage means 34 is a USB drive, internal port or socket 36 is a USB port or socket. The internal data storage means 34 is the only link between the control means 33 and the critical device 43 44 to be protected. As will be explained later, the internal data storage means 34 can be connected (indirectly), via software, to the critical device 43 44 and to the adapter 30. The only connection between the adapter 30 and the critical device 43 44 is the physical output 32 of the adapter (socket or port 32).

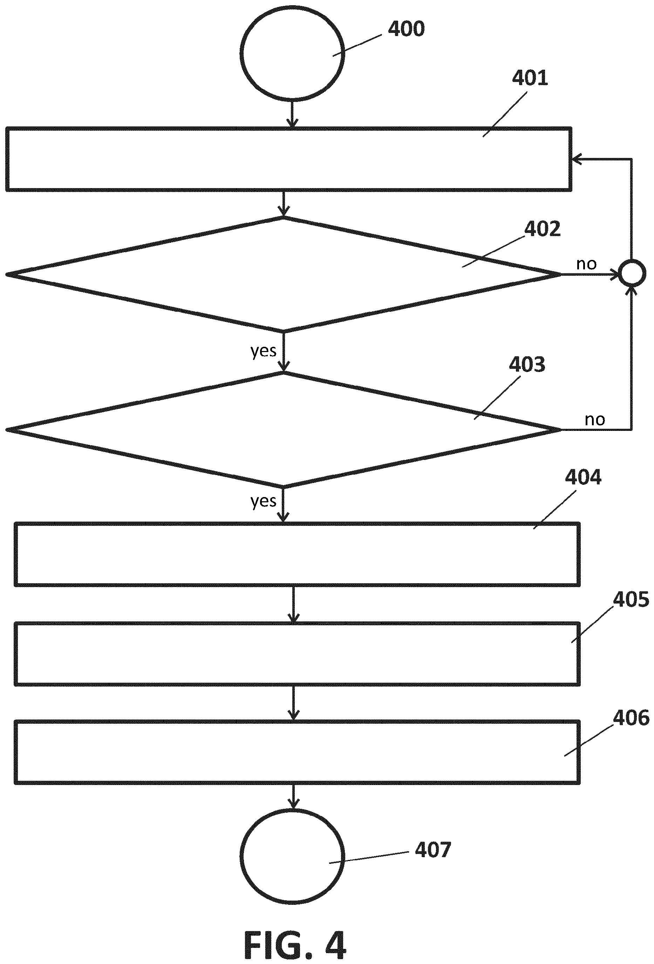

Isolating means or switching means 35 is a functional component associated to several electronic components that enable the performance of a connection between the internal data storage means 34, the control means 33 and the external critical device 43 44 to which the adapter 30 is physically plugged through socket or port 32. As shown in figure 3 by the line connecting isolating means 35 and socket 36, the internal data storage means 34 is only connected to isolating means 35, which is the functional element permitting logical connection between the internal data storage means 34 and any other element. This logical connection is permitted by the isolating means or switching means 35 but controlled and managed by the control means 33. In other words, isolating or switching means 35 is or acts as a switch configured to either isolate or communicate other elements following the instructions of control means 33. The operation of adapter 30 is explained in detail in relation to figure 4.

As already mentioned, the adapter 30 is intended to be plugged into a corresponding port 436 of a critical device 43 44. Non-limiting examples of critical devices are: a personal computer, a laptop, a PLC (programmable logic controller), a SCADA system, among others. By connecting the adapter 30 to the critical device 43 44, the critical device only exchanges data with the internal data storage device (auxiliary data storage device) 34. The adapter 30 works therefore as an interface between an external data storage device (inserted into the first socket or port 31 of the adapter 30) carried by a user and the critical device 43 44 into which the data stored in the external data storage device is intended to be loaded/executed. Those data comprised in the external data storage device carried by the user are validated (or not, as the case may be) in the adapter 30 (in particular, in the control means 33) and, if validation is correct, allowed files are transferred to the internal (auxiliary) data storage device 34 comprised within the adapter 30.

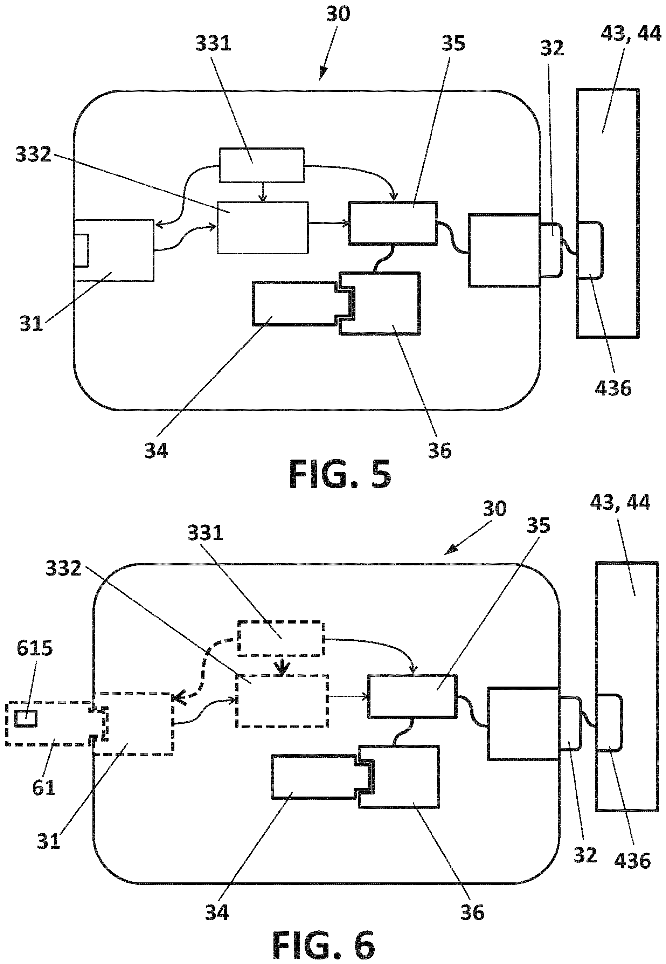

Next a functional description is provided in relation to flow chart of figure 4 and several stages of adapter 30 represented in figures 5-10. The adapter 30 is by default connected (by means of port or socket 32) to a corresponding port 436 of a critical device 43 44 (in which no other (different from the adapter) external data storage devices are allowed to be connected). Port 436 is physically and permanently blocked by adapter 30. Therefore, no other physical connection is possible in port 436. When no external data storage device is connected (by means of port or socket 31) to the adapter 30, the adapter 30 keeps a logical connection between the internal (auxiliary) data storage drive 34 and the critical device 43 44. This "dummy" connection between the internal data storage drive or means 34 and the critical device 43 44 is required since the critical device only understands the adapter 30 as a data storage device and not as any other component requiring for example the installation of software, drivers, etc. Preferably, in order to improve security, all the input/output sockets or ports of the critical device 43 44 are disabled or blocked, so that the only entry point of data/files is via the adapter 30.

Referring to figure 4, in an initial stage ("Start", stage 400) adapter 30 is in an initial status that can be referred to as a "stand-by" status. This initial status or stand-by status of adapter 30 is represented in figure 5. Figures 5-10 represent different stages of the adapter 30. In bolded or thick line we show the components which are either directly or indirectly connected to the internal data storage device 34 at each stage. In dashed line, we show the active components in each process stage apart from the ones which are directly or indirectly connected to the internal data storage device 34.

The initial status implies that the adapter 30 is on (in an "ON" state) and socket or port 32 is plugged into a corresponding port or socket 436 of a critical device 43 44. The internal data storage device (auxiliary data storage device) 34 is connected to the critical device (and not to any device or part of adapter 30). The internal data storage device 34 is always plugged into an internal socket 36. The adapter 30 isolates the critical device 43 44 from any external data storage means (referred to as 61 in figure 6) and the external data storage means is not physically and directly connected to the critical device 43 44. Isolating means 35 enables the logical connection between the internal data storage device 34 and the critical device 43 44. This logical connection is permitted by the isolating or switching means 35 but controlled and managed by the control means 33. At this default status ("stand-by" status), a "dummy" connection between the internal data storage drive or means 34 and the critical device 43 44 is established. This way, the critical device 43 44 understands that adapter 30 is a data storage device. Thanks to this logical connection, the critical device 43 44 can read or detect, for example in an application for file exploring, the internal data storage device 34 as if this device 34 was physically plugged into port 436 of the critical device 43 44. On the contrary, the critical device 43 44 cannot read or detect the adapter 30 (as a whole). In other words, for the critical device, adapter 30 does not exist. For the critical device, only a data storage device (in this stage, the internal data storage device 34) exists. As a consequence, there is no need to install any specific driver or software on the critical device. It is remarked that so far, there is no external data storage device plugged into port or socket 31 of adapter 30.

The process is started when an external data storage device 61 with protected content 615 (by control device 11 12 13) carried by a user is inserted into the adapter 30 via port 31 (stage 401). This external data storage device 61 can be any data storage device, for example a corporate one or a private one. When the external device 61 is inserted, the control means 33 (microprocessor or CPU 331 and memory 332) detect this event and start collecting information from the external device 61. So far, no connection is switched. This means that while control means 33 interrogates the external data storage device 61, the internal data storage device 34 keeps on being logically connected to port or socket 436 of the critical device 43 44.

Then, a verification of the external data storage device 61 is executed (stage 402), in order to determine if that external data storage device 61 is an authorized one (valid one) or not. In a particular embodiment, authorized external devices 61 are those external devices which are corporate ones and are provided by control devices 11 12 13. In this case, the verification process is preferably the same verification process as already described with respect to the software agent.

If that external device 61 is not a valid one, no further operations are executed. If the external device 61 is valid, additional verification is executed (stage 403), in order to check if the files stored in the external device 61 are valid (allowed) files. In figure 6, the files 615 stored in the external device 61 are schematized. This content is examined by the control means 33. Preferably, this file verification process is the same file verification process as already described with respect to the software agent, that is to say, it is verified if its content has not been altered since the last time it was verified by a control device 11 12 13. If this operation is not successful, the adapter 30 interrupts any action associated to the external data storage device 61 and goes back to the initial status (stand-by status). This process is thus terminated. If, on the contrary, the operation is successful, it implies that the files 615 are valid. In figure 6, the active components involved in the verification of external device 61 and its content 615 are shown in dashed line.

In other words, the adapter 30 comprises means for detecting if the data storage device 61 inserted into port 31 of the adapter 30 is a private one or a corporate one. In the event of a private one, it denies the data storage device access to that computer device 43 44. In the event of a corporate one, it checks if its content has been verified and cleaned by a control device 11 12 13 and, in the event it has, it decrypts the content of the data storage device, thus permitting the critical computer device 43 44 to read or run said content.

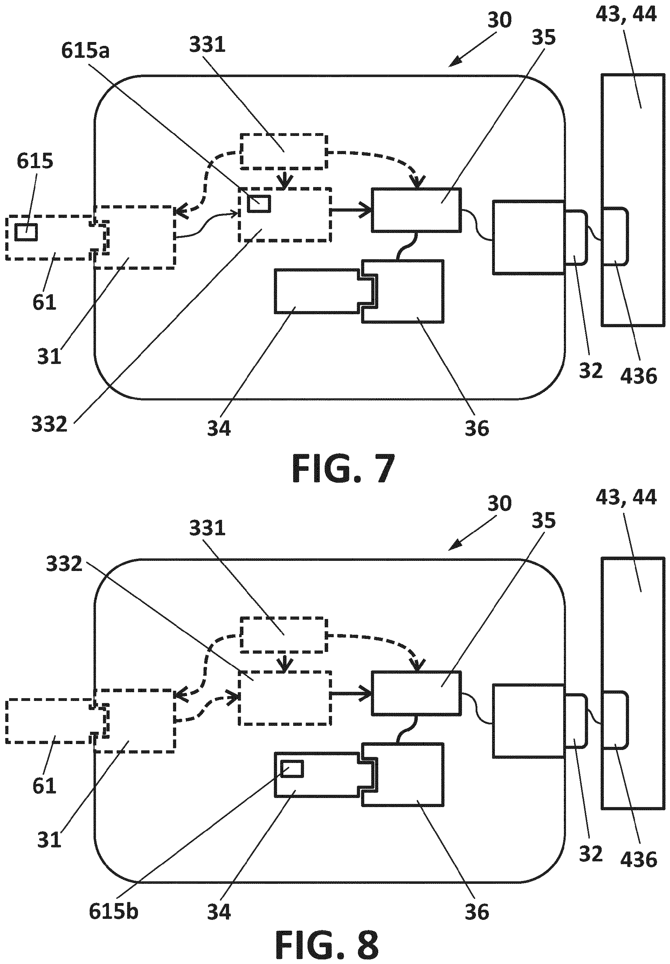

In the event that all the validations (stages 402, 403) are successful, the adapter 30 disconnects the internal data storage means 34 from the logical default connection to the critical device (emphasized in bold line in figure 5) and logically connects the internal data storage means 34 to the adapter 30 (in particular, to the control means 33) (stage 404). This is illustrated in figure 7. This is controlled by control means 33, which is responsible for changing the state of isolating means 35 such that the logical connections of the internal data storage device 34 are changed (disconnecting the connection between the internal data storage device and the critical device). This implies that the critical device 43 44 stops detecting or reading the internal data storage device 34. The status of the internal data storage device 34 with respect to the critical device 43 44 is as if the internal data storage device 34 had been physically unplugged from the critical device 43 44. However, no physical manipulation has been done. The control means 33 now detects or reads the internal data storage device 34. Preferably, the internal data storage drive 34 is cleaned (its content deleted) in order to prevent the adapter 30 from being contaminated with undesired content, viruses, etc.

Now, data 615 stored in the external data storage device 61 carried by the user can be securely decrypted and transferred from the external data storage device 61 to the internal data storage means 34 (stage 405) (data 615b in figure 8), while the input/output sockets of the critical device 43 44 are still blocked. This is done as follows: The file(s) 615 stored in the external data storage device 61 are copied into a temporal file 615a located in or created in the memory means 332. The copied file(s) 615a is/are then decrypted, preferably in a similar way as files were decrypted by a software agent as previously described. The decrypted files 615a are copied from the memory means 332 into the internal data storage means 34 (decrypted files now referred to as 615b in the internal data storage device 34). The file(s) copied in the memory means 332 are deleted. This stage is illustrated in figure 8, in which the connection between the internal data storage device 34 and the critical device 43 44 is not bolded anymore. It is remarked that the connection between the memory means 332 and the isolating means 35 is now bolded, meaning that there is a connection between the memory means 332 and the internal data storage device 34.

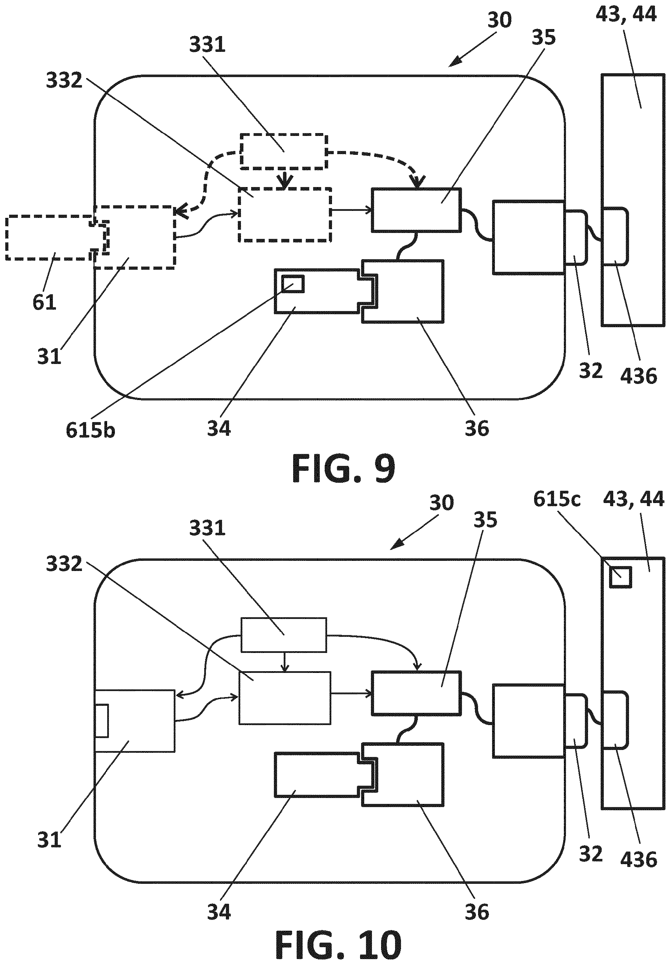

Finally (stage 406), the control means 33 disconnects the internal data storage means 34 from the adapter 30 and connects the internal data storage means 34 to the critical device 43 44. This is illustrated in figure 9, which emphasizes again (bolded) the connection between the isolating means 35 and the critical device 43 44. The control means 33 again changes the state of the isolating means 35 in such a way that the internal data storage device 34 is connected to the critical device 43 44. Then, the internal data storage device 34 is not connected anymore to the adapter 30, but only to the critical device 43 44. The internal data storage means 34 comprising the valid files 615b is now available only in the critical device 43 44, which can detect or read the internal data storage means 34, and therefore the files 615b stored in this internal data storage means 34 can be used (read, executed...) This is represented by reference 615c in figure 10. The adapter 30 then returns to its stand-by position or status (initial stage 400). The external data storage device 61 can now optionally be retrieved/ unplugged from the adapter 30. When a new external data storage device is plugged into port or socket 31 in the adapter 30, the process starts again.

The process ends when the adapter 30 is in "stand-by" status again ("End" or stage 407) and the files have been copied/executed from the internal data storage device 34 to the critical device 43 44 (files 615c in figure 10).

In conclusion, the proposed method, system permit to prevent attacks originated in data storage systems.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A security system (1) for preventing cyberattacks in a system comprising a plurality of computer devices (41, 42, 43, 44), the security system (1) comprising:
- at least one control device (11, 12, 13) comprising:
- means (112) for authenticating a user trying to physically access a zone comprising at least one computer device of said plurality of computer devices (41, 42, 43, 44);
- means for authenticating a data storage device said user intends to insert in at least one of those computer devices (41, 42, 43, 44) and for verifying, cleaning and encrypting the content of said data storage device;
- means for, if the data storage device carried by said user is a private data storage device, providing (113) a corporate data storage device, wherein said provided corporate data storage device comprises a copy of the verified, cleaned and encrypted content originally stored in said private data storage device;
- a software agent (20) installed in at least one of said plurality of computer devices (41, 42), said software agent (20) being configured: for detecting if a data storage device inserted into a port of said computer device (41, 42) is a private one or a corporate one; for, in the event of a private one, denying the data storage device access to that computer device (41, 42); and for, in the event of a corporate one, checking if its content has been verified, cleaned and encrypted by a control device (11, 12, 13) and, in the event it has, decrypting the content of said corporate data storage device, thus permitting said computer device (41, 42) to read or run said content.

2. The security system (1) of claim 1, wherein said data storage device is a USB drive, or a mini USB drive, or a micro USB drive, or a DVD, or a CD, or a SD card, or a mini SD card or a micro SD card, or a portable hard disk, or any other format of data storage system.

3. The security system (1) of any preceding claims, wherein said means (112) for authenticating a user comprises means for reading an access card or an electronic identifier of said user, wherein said means for reading a card or an electronic identifier comprises a slot for inserting a card or a wireless reader for wirelessly detecting the information registered in the card or in the electronic identifier.

4. The security system (1) of any preceding claims, further comprising at least one adapter (30) comprising a first port (31) configured to receive an external data storage device (61) and a second port (32) configured to be plugged in a corresponding port of one computer device (43, 44) of said plurality of computer devices (41, 42, 43, 44), said at least one adapter (30) providing a physical interface between said external data storage device (61) and said computer device (43, 44) while isolating said computer device (43, 44) from said external data storage device (61).

5. The security system (1) of claim 4, wherein said adapter (30) comprises means for detecting if said data storage device (61) inserted into said port (31) of the adapter (30) is a private one or a corporate one; for, in the event of a private one, denying the data storage device (61) access to that computer device (43, 44); and for, in the event of a corporate one, checking if its content has been verified, cleaned and encrypted by a control device (11, 12, 13) and, in the event it has, decrypting the content of said data storage device, thus permitting said computer device (43, 44) to read or run said content.

6. A method for preventing cyberattacks in a system comprising a plurality of computer devices (41, 42, 43, 44), the method comprising:
- in at least one control device (11, 12, 13):
- authenticating (112) a user trying to physically access a zone comprising at least part of said system comprising a plurality of computer devices (41, 42, 43, 44);
- authenticating a data storage device said user intends to insert in at least one of those computer devices (41, 42, 43, 44) and verifying, cleaning and encrypting the content of said data storage device, wherein said data storage device is either a corporate one or a private one;
- if the data storage device carried by said user is a private data storage device, providing (113) a corporate data storage device, wherein said provided corporate data storage device comprises a copy of the verified, cleaned and encrypted content originally stored in said private data storage device;
- in at least one (41, 42) of said plurality of computer devices (41, 42, 43, 44):
- detecting if a data storage device inserted into a port of said computer device (41, 42) is a private one or a corporate one;
- if it is a private one, denying the data storage device access to that computer device (41, 42); and
- if it is a corporate one, checking if its content has been verified, cleaned and encrypted by a control device (11, 12, 13) and, in the event it has, decrypting the content of said data storage device, thus permitting said computer device (41, 42) to read or run said content.

7. The method of claim 6, wherein said stage of user authentication (112) comprises reading an access card or an electronic identifier of said user, wherein said card or electronic identifier reading is performed either by inserting said card into a slot or by wirelessly detecting the information registered in the card or in the electronic identifier;
and wherein said stage of authentication of the data storage device comprises comparing an identifier associated to the data storage device with the identifiers comprised in a list of identifiers corresponding to respective corporate data storage devices.

8. The method of any of claims 6-7, further comprising, after authenticating (112) said user and authenticating said data storage device:
- copying the content of said data storage device, either a corporate one or a private one, in memory means comprised in said at least one control device (11, 12, 13);
- eliminating from said copied content any malware;
- verifying that said copied content belongs to a list of allowed files or allowed file extensions;
- creating a file within said memory means, said file comprising the malware-free content that belongs to said list of allowed files;
- copying said created file into said corporate data storage device.

9. The method of claim 8, wherein prior to copying said created file into said corporate data storage device:
- symmetrically encrypting the file;
- making a hash for checking its integrity;
- signing the encrypted and hashed file with a private key.

10. The method of any of claims 6-9, wherein said stage of detecting in at least one (41, 42) of said plurality of computer devices (41, 42, 43, 44) if the data storage device inserted into a port of said computer device (41, 42) is a private one or a corporate one comprises: comparing an identifier of said inserted data storage device with each identifier of a list of identifiers corresponding to corporate data storage devices.

11. The method of any of claims 6-10, wherein said data storage device is a USB drive, or a mini USB drive, or a micro USB drive, or a DVD, or a CD, or a SD card, or a mini SD card or a micro SD card, or a portable hard disk, or any other format of data storage system.

12. The method of any of claims 6-11, further comprising, in at least one (43, 44) of said plurality of computer devices (41, 42, 43, 44):
- plugging in a port (436) of said at least one computer device (43, 44) an adapter (30) comprising a first port (31) configured to receive an external data storage device (61), said adapter (30) being plugged into said port (436) of the computer device (43, 44) through a port (32) of the adapter (30);
- plugging into said first port (31) of said adapter (30) an external data storage device (61);
- providing by said adapter (30) a physical interface between said external data storage device (61) and said computer device (43, 44) while isolating said computer device (43, 44) from said external data storage device (61).

13. The method of claim 12, further comprising in said adapter (30): detecting if the data storage device (61) inserted into said port (31) of the adapter (30) is a private one or a corporate one; if it is a private one, denying the data storage device (61) access to that computer device (43, 44); and if it is a corporate one, checking if its content (615) has been verified, cleaned and encrypted by a control device (11, 12, 13) and, in the event it has, decrypting the content of said data storage device (61), thus permitting said computer device (43, 44) to read or run said content (615c).

## Patentansprüche

1. Sicherheitssystem (1) zur Verhinderung von Cyberangriffen in einem System, das eine Vielzahl von Computervorrichtungen (41, 42, 43, 44) umfasst, wobei das Sicherheitssystem (1) umfasst:
- wenigstens eine Kontrollvorrichtung (11, 12, 13), umfassend:
- Mittel (112) zur Authentifizierung eines Nutzers, der physischen Zugang zu einer Zone zu erlangen, die wenigstens eine Computervorrichtung der Vielzahl von Computervorrichtungen (41, 42, 43, 44) umfasst;
- Mittel zur Authentifizierung einer Datenspeichervorrichtung, welche der Nutzer in wenigstens eine der Computervorrichtungen (41, 42, 43, 44) einführen will, und zur Verifizierung, Reinigung und Verschlüsselung des Inhalts der Datenspeichervorrichtung;
- Mittel zur Bereitstellung (113) einer geschäftlichen Datenspeichervorrichtung, wenn die vom Nutzer getragene Datenspeichervorrichtung eine private Datenspeichervorrichtung ist, wobei die bereitgestellte geschäftliche Datenspeichervorrichtung eine Kopie des verifizierten, gereinigten und verschlüsselten Inhalts, der ursprünglich in der privaten Datenspeichervorrichtung gespeichert war, umfasst;
- einen Softwareagenten (20), der in wenigstens einer der Vielzahl der Computervorrichtungen (41, 42) installiert ist, wobei der Softwareagent (20) konfiguriert ist für: Detektion, ob eine Datenspeichervorrichtung, die in einem Port der Computervorrichtung (41, 42) eingeführt wird, eine private oder eine geschäftliche ist; Zugangsverweigerung der Datenspeichervorrichtung zu der Computervorrichtung (41, 42), wenn es sich um eine private handelt; und, wenn es sich um eine geschäftliche handelt, Überprüfung, ob der Inhalt von einer Kontrollvorrichtung (11, 12, 13) verifiziert, gereinigt und verschlüsselt wurde, und, falls dies der Fall ist, Entschlüsseln des Inhalts der geschäftlichen Datenspeichervorrichtung, um so der Computervorrichtung (41, 42) zu ermöglichen, den Inhalt zu lesen oder auszuführen.

2. Sicherheitssystem (1) gemäß Anspruch 1, wobei die Datenspeichervorrichtung ein USB-Laufwerk, oder ein Mini-USB-Laufwerk, oder ein Micro-USB-Laufwerk, oder eine DVD, oder eine CD, oder eine SD-Karte, oder eine Mini-SD-Karte, oder eine Micro-SD-Karte, oder eine tragbare Festplatte, oder ein beliebiges anderes Format eines Datenspeicherungssystems ist.

3. Sicherheitssysteme (1) gemäß einem der vorhergehenden Ansprüche, wobei die Mittel (112) zur Authentifizierung eines Nutzers Mittel zum Lesen einer Zugangskarte oder eines elektronischen Identifizierers des Nutzers umfasst, wobei die Mittel zum Lesen einer Karte oder eines elektronischen Identifizierers einen Schlitz zum Einführen einer Karte oder ein drahtloses Lesegerät zur drahtlosen Detektion der auf der Karte oder auf dem elektronischen Identifizierer registrierten Information umfasst.

4. Sicherheitssystem (1) gemäß einem der vorhergehenden Ansprüche, welches außerdem wenigstens ein Adapter (30) umfasst, der einen ersten Port (31) umfasst, der zur Aufnahme einer externen Datenspeicherungsvorrichtung (61) ausgelegt ist, und einen zweiten Port (32), der ausgelegt ist, in einen entsprechenden Port von einer der Computervorrichtungen (43, 44) der Vielzahl von Computervorrichtungen (41, 42, 43, 44) eingesetzt zu werden, wobei der wenigstens eine Adapter (30) eine physikalische Schnittstelle zwischen der externen Datenspeicherungsvorrichtung (61) und der Computervorrichtung (43, 44) bereitstellt, während gleichzeitig die Computervorrichtung (43, 44) gegenüber der externen Datenspeicherungsvorrichtung (61) isoliert wird.

5. Sicherheitssysteme (1) gemäß Anspruch 4, wobei der Adapter (30) Mittel umfasst, zur Detektion, ob es sich bei der in Port (31) des Adapters (30) eingesetzten Datenspeicherungsvorrichtung (61) um eine private oder eine geschäftliche handelt, zur Zugangsverweigerung der Datenspeicherungsvorrichtung (61) zu der Computervorrichtung (43, 44), wenn es sich um eine private handelt; und, wenn es sich um eine geschäftliche handelt, zur Überprüfung, ob deren Inhalt durch eine Kontrollvorrichtung (11, 12, 13) verifiziert, gereinigt und verschlüsselt wurde, und, falls dies der Fall ist, zur Entschlüsselung des Inhalts der Datenspeicherungsvorrichtung, um so der Computervorrichtung (43, 44) zu ermöglichen, den Inhalt zu lesen oder auszuführen.

6. Verfahren zur Verhinderung von Cyberangriffen in einem System, das eine Vielzahl von Computervorrichtungen (41, 42, 43, 44) umfasst, wobei das Verfahren umfasst:
- in wenigstens einer Kontrollvorrichtung (11, 12, 13):
- Authentifizieren (112) eines Nutzers, der versucht, physischen Zugang zu einer Zone zur erlangen, die wenigstens einen Teil des Systems umfasst, welches eine Vielzahl von Computervorrichtungen (41, 42, 43, 44) umfasst;
- Authentifizieren einer Datenspeichervorrichtung, die der Nutzer in wenigstens eine der Computervorrichtungen (41, 42, 43, 44) einsetzen will und Verifizieren, Reinigen und Verschlüsseln des Inhalts der Datenspeichervorrichtung, wobei die Datenspeichervorrichtung entweder eine gewerbliche oder eine private ist;
- wenn die vom Nutzer getragene Datenspeichervorrichtung eine private Datenspeichervorrichtung ist, Bereitstellen (113) einer gewerblichen Datenspeichervorrichtung, wobei der bereitgestellte gewerbliche Datenspeichervorrichtung eine Kopie des verifizierten gereinigten und verschlüsselten Inhalts umfasst, der ursprünglich in der privaten Datenspeichervorrichtung gespeichert war;
- in wenigstens einer (41, 42) der Vielzahl von Computervorrichtungen (41,42,43,44):
- Detektieren, ob die in einem Port der Computervorrichtung (41, 42) eingeführte Datenspeichervorrichtung eine private oder eine gewerbliche ist;
- wenn es sich um eine private handelt, Verweigern des Zugangs der Datenspeichervorrichtung zu der Computervorrichtung (41, 42); und
- wenn es sich um eine geschäftliche-Speichervorrichtung handelt, Überprüfen, ob ihr Inhalt durch eine Kontrollvorrichtung (11, 12, 13) verifiziert, gereinigt und verschlüsselt wurde, und, wenn dies der Fall ist, Entschlüsseln des Inhalts der Datenspeichervorrichtung, um so der Computervorrichtung (41, 42) zu erlauben, den Inhalt zu lesen oder auszuführen.

7. Verfahren gemäß Anspruch 6, wobei der Schritt der Nutzerauthentifizierung (112) umfasst, eine Zugangskarte oder einen elektronischen Identifizierer des Nutzers auszulesen, wobei sich das Auslesen der Karte oder des elektronischen Identifizierers entweder durch Einführen der Karte in einen Schlitz oder durch drahtlose Detektion der in der Karte oder dem elektronischen Identifizierer registrierten Information durchgeführt wird;
und wobei der Schritt der Authentifizierung der Datenspeichervorrichtung umfasst, einen der Datenspeichervorrichtung zugeordneten Identifizierer mit Identifizierern zu vergleichen, die in einer Liste von Identifizierern enthalten sind, welche den jeweiligen geschäftliche Datenspeichervorrichtungen entsprechen.

8. Verfahren gemäß einem der Ansprüche 6 bis 7, welches außerdem nach dem Authentifizieren (112) des Nutzers und dem Authentifizieren der Datenspeichervorrichtung außerdem umfasst:
- Kopieren des Inhalts der Datenspeichervorrichtung, wobei es sich entweder um eine geschäftliche oder eine private handeln kann, in Speichermittel, die in der wenigstens einer Kontrollvorrichtung (11, 12, 13) vorgesehene sind;
- Beseitigen jeglicher Schadsoftware aus dem kopierten Inhalt;
- Verifizieren, dass der kopierte Inhalt zu einer Liste von erlaubten Dateien oder erlaubten Datei-Erweiterungen gehört;
- Erzeugen einer Datei in den Speichermitteln, wobei die Datei den schadsoftwarefreien Inhalt, der zu der Liste der erlaubten Dateien gehört, umfasst;
- Kopieren der erzeugten Datei in eine geschäftliche Datenspeichervorrichtung.

9. Verfahren gemäß Anspruch 8, wobei vor dem Kopieren der erzeugten Datei in die geschäftliche Datenspeichervorrichtung die Schritte ausgeführt werden:
- Symmetrisches Verschlüsseln der Datei;
- Erzeugen eines Hash-Werts zur Überprüfung ihrer Integrität;
- Signieren der verschlüsselten und gehashten Datei mit einem privaten Schlüssel.

10. Verfahren gemäß einem der Ansprüche 6 bis 9, wobei der Schritt der Detektion in wenigstens einer (41, 42) der Vielzahl von Computervorrichtungen (41, 42, 43, 44), ob die in einem Port der Computervorrichtung (41, 42) eingeführte Datenspeicherungsvorrichtung eine private oder eine geschäftliche ist, umfasst: Vergleichen eines Identifizierers der eingeführten Datenspeichervorrichtung mit jedem Identifizierer einer Liste von Identifizierern, welche geschäftlichen Datenspeichervorrichtungen entsprechen.

11. Verfahren gemäß einem der Ansprüche 6 bis 10, wobei die Datenspeichervorrichtung ein USB-Laufwerk, oder ein Mini-USB-Laufwerk, oder ein Micro-USB-Laufwerk, oder eine DVD, oder eine CD, oder eine SD-Karte, oder eine Mini-SD-Karte, oder eine Micro-SD-Karte, oder eine tragbare Festplatte, oder jegliches andere Format eines Datenspeichersystems ist.

12. Verfahren gemäß einem der Ansprüche 6 bis 11, wobei man außerdem in wenigstens einer (43, 44) der Vielzahl von Computervorrichtungen (41, 42, 43, 44):
- einen Adapter (30), der einen ersten Port (31), der ausgelegt ist, eine externe Datenspeichervorrichtung (61) aufzunehmen, in einen Port (436) der wenigstens einen Computervorrichtung (43, 44) einsetzt, wobei der Adapter (30) durch einen Port (32) des Adapters (30) in den Port (436) der Computervorrichtung (43, 44) eingesetzt wird;
- Einsetzen einer externen Datenspeichervorrichtung (61) in den ersten Port (31) des Adapters (30);
- Bereitstellen einer physikalischen Schnittstelle durch den Adapter (30) zwischen der externen Datenspeichervorrichtung (61) und der Computervorrichtung (43, 44), während die Computervorrichtung (43, 44) gleichzeitig von der externen Datenspeichervorrichtung (61) isoliert ist.

13. Verfahren gemäß Anspruch 12, welches außerdem in dem Adapter (30) die Schritt umfasst: Detektieren, ob die in den Port (31) des Adapters (30) eingesetzte Datenspeichervorrichtung (61) eine private oder eine geschäftliche ist; wenn es sich um eine private handelt, Verweigern des Zugangs der Datenspeichervorrichtung (61) zu der Computervorrichtung (43, 44); und, wenn es sich um eine geschäftliche handelt, Überprüfen, ob ihr Inhalt (615) durch eine Kontrollvorrichtung (11, 12, 13) verifiziert, gereinigt und verschlüsselt wurde, und, wenn dies der Fall war, Entschlüsseln des Inhalts des Datenspeichervorrichtung (61), um so der Computervorrichtung (43, 44) zu ermöglichen, ihren Inhalt (615) zu lesen oder auszuführen.

## Revendications

1. Système de sécurité (1) pour empêcher des cyberattaques dans un système comprenant une pluralité de dispositifs informatiques (41, 42, 43, 44), le système de sécurité (1) comprenant :
- au moins un dispositif de commande (11, 12, 13) comprenant :
- des moyens (112) pour authentifier un utilisateur tentant d'accéder physiquement à une zone comprenant au moins un dispositif informatique parmi ladite pluralité de dispositifs informatiques (41, 42, 43, 44) ;
- des moyens pour authentifier un dispositif de stockage de données que ledit utilisateur tente d'insérer dans au moins l'un de ces dispositifs informatiques (41, 42, 43, 44) et pour vérifier, nettoyer et crypter le contenu dudit dispositif de stockage de données ;
- des moyens pour, si le dispositif de stockage de données porté par ledit utilisateur est un dispositif de stockage de données privé, fournir (113) un dispositif de stockage de données d'entreprise, lequel dispositif de stockage de données d'entreprise fourni comprend une copie du contenu vérifié, nettoyé et crypté stocké à l'origine dans ledit dispositif de stockage de données privé ;
- un agent logiciel (20) installé dans au moins l'un parmi ladite pluralité de dispositifs informatiques (41, 42), ledit agent logiciel (20) étant configuré : pour détecter si un dispositif de stockage de données inséré dans un port dudit dispositif informatique (41, 42) est un dispositif privé ou un dispositif d'entreprise ; pour, dans le cas d'un dispositif privé, refuser au dispositif de stockage de données l'accès à ce dispositif informatique (41, 42) ; et pour, dans le cas d'un dispositif d'entreprise, déterminer si son contenu a été vérifié, nettoyé et crypté par un dispositif de commande (11, 12, 13) et, le cas échéant, décrypter le contenu dudit dispositif de stockage de données d'entreprise, ce qui permet ainsi audit dispositif informatique (41, 42) de lire ou d'exécuter ledit contenu.

2. Système de sécurité (1) selon la revendication 1, dans lequel ledit dispositif de stockage de données est une clé USB, ou une clé mini USB, ou une clé micro USB, ou un DVD, ou un CD, ou une carte SD, ou une carte mini SD ou une carte micro SD, ou un disque dur portable, ou n'importe quel autre format de système de stockage de données.

3. Système de sécurité (1) selon l'une quelconque des revendications précédentes, dans lequel lesdits moyens (112) pour authentifier un utilisateur comprennent des moyens pour lire une carte d'accès ou un identifiant électronique dudit utilisateur, dans lequel lesdits moyens pour lire une carte ou un identifiant électronique comprennent une fente pour insérer une carte ou un lecteur sans fil pour détecter sans fil les informations enregistrées dans la carte ou dans l'identifiant électronique.

4. Système de sécurité (1) selon l'une quelconque des revendications précédentes, comprenant en outre au moins un adaptateur (30) comprenant un premier port (31) configuré pour recevoir un dispositif de stockage de données externe (61) et un deuxième port (32) configuré pour être enfiché dans un port correspondant d'un dispositif informatique (43, 44) parmi ladite pluralité de dispositifs informatiques (41, 42, 43, 44), ledit au moins un adaptateur (30) fournissant une interface physique entre ledit dispositif de stockage de données externe (61) et ledit dispositif informatique (43, 44) tout en isolant ledit dispositif informatique (43, 44) dudit dispositif de stockage de données externe (61).

5. Système de sécurité (1) selon la revendication 4, dans lequel ledit adaptateur (30) comprend des moyens pour détecter si ledit dispositif de stockage de données (61) inséré dans ledit port (31) de l'adaptateur (30) est un dispositif privé ou un dispositif d'entreprise ; pour, dans le cas d'un dispositif privé, refuser au dispositif de stockage de données (61) l'accès à ce dispositif informatique (43, 44) ; et pour, dans le cas d'un dispositif d'entreprise, déterminer si son contenu a été vérifié, nettoyé et crypté par un dispositif de commande (11, 12, 13) et, le cas échéant, décrypter le contenu dudit dispositif de stockage de données, ce qui permet ainsi audit dispositif informatique (43, 44) de lire ou d'exécuter ledit contenu.

6. Méthode pour empêcher des cyberattaques dans un système comprenant une pluralité de dispositifs informatiques (41, 42, 43, 44), la méthode comprenant :
- dans au moins un dispositif de commande (11, 12, 13) :
- l'authentification (112) d'un utilisateur tentant d'accéder physiquement à une zone comprenant au moins une partie dudit système comprenant une pluralité de dispositifs informatiques (41, 42, 43, 44) ;
- l'authentification d'un dispositif de stockage de données que ledit utilisateur tente d'insérer dans au moins l'un de ces dispositifs informatiques (41, 42, 43, 44) et la vérification, le nettoyage et le cryptage du contenu dudit dispositif de stockage de données, lequel dispositif de stockage de données est soit un dispositif privé soit un dispositif d'entreprise ;
- si le dispositif de stockage de données porté par ledit utilisateur est un dispositif de stockage de données privé, la fourniture (113) d'un dispositif de stockage de données d'entreprise, lequel dispositif de stockage de données d'entreprise fourni comprend une copie du contenu vérifié, nettoyé et crypté stocké à l'origine dans ledit dispositif de stockage de données privé ;
- dans au moins l'un (41, 42) parmi ladite pluralité de dispositifs informatiques (41, 42, 43, 44) :
- la détection qu'un dispositif de stockage de données inséré dans un port dudit dispositif informatique (41, 42) est un dispositif privé ou un dispositif d'entreprise ;
- s'il s'agit d'un dispositif privé, le refus au dispositif de stockage de données de l'accès à ce dispositif informatique (41, 42) ; et
- s'il s'agit d'un dispositif d'entreprise, la détermination que son contenu a été vérifié, nettoyé et crypté par un dispositif de commande (11, 12, 13) et, le cas échéant, le décryptage du contenu dudit dispositif de stockage de données, ce qui permet ainsi audit dispositif informatique (41, 42) de lire ou d'exécuter ledit contenu.

7. Méthode selon la revendication 6, dans laquelle ladite étape d'authentification d'utilisateur (112) comprend la lecture d'une carte d'accès ou d'un identifiant électronique dudit utilisateur, dans lequel ladite lecture de carte ou d'identifiant électronique est effectuée soit par insertion de ladite carte dans une fente soit par détection sans fil des informations enregistrées dans la carte ou dans l'identifiant électronique ;
et dans lequel ladite étape d'authentification du dispositif de stockage de données comprend la comparaison d'un identifiant associé au dispositif de stockage de données avec les identifiants compris dans une liste d'identifiants correspondant à des dispositifs de stockage de données d'entreprise respectifs.

8. Méthode selon l'une quelconque des revendications 6 et 7, comprenant en outre, après l'authentification (112) dudit utilisateur et l'authentification dudit dispositif de stockage de données :
- la copie du contenu dudit dispositif de stockage de données, qu'il s'agisse d'un dispositif d'entreprise ou d'un dispositif privé, dans des moyens de mémoire compris dans au moins un dispositif de commande (11, 12, 13) ;
- l'élimination de tout logiciel malveillant dans le contenu copié ;
- la vérification que ledit contenu copié appartient à une liste de fichiers autorisés ou d'extensions de fichier autorisées ;
- la création d'un fichier dans lesdits moyens de mémoire, ledit fichier comprenant le contenu exempt de logiciel malveillant qui appartient à ladite liste de fichiers autorisés ;
- la copie dudit fichier créé dans ledit dispositif de stockage de données d'entreprise.

9. Méthode selon la revendication 8, dans laquelle, avant la copie dudit fichier créé dans ledit dispositif de stockage de données d'entreprise :
- le fichier est crypté symétriquement ;
- il est effectué un hachage pour vérifier son intégrité ;
- le fichier crypté et haché est signé au moyen d'une clé privée.

10. Méthode selon l'une quelconque des revendications 6 à 9, dans laquelle ladite étape de détection dans au moins l'un (41, 42) parmi ladite pluralité de dispositifs informatiques (41, 42, 43, 44), si le dispositif de stockage de données inséré dans un port dudit dispositif informatique (41, 42) est un dispositif privé ou un dispositif d'entreprise, comprend : la comparaison d'un identifiant dudit dispositif de stockage de données inséré avec chaque identifiant d'une liste d'identifiants correspondant à des dispositifs de stockage de données d'entreprise.

11. Méthode selon l'une quelconque des revendications 6 à 10, dans laquelle ledit dispositif de stockage de données est une clé USB, ou une clé mini USB, ou une clé micro USB, ou un DVD, ou un CD, ou une carte SD, ou une carte mini SD ou une carte micro SD, ou un disque dur portable, ou n'importe quel autre format de système de stockage de données.

12. Méthode selon l'une quelconque des revendications 6 à 11, comprenant en outre, dans au moins l'un (43, 44) parmi ladite pluralité de dispositifs informatiques (41, 42, 43, 44) :
- l'enfichage, dans un port (436) dudit au moins un dispositif informatique (43, 44), d'un adaptateur (30) comprenant un premier port (31) configuré pour recevoir un dispositif de stockage de données externe (61), ledit adaptateur (30) étant enfiché dans ledit port (436) dudit dispositif informatique (43, 44) par l'intermédiaire d'un port (32) de l'adaptateur (30) ;
- l'enfichage, dans ledit premier port (31) dudit adaptateur (30), d'un dispositif de stockage de données externe (61) ;
- la fourniture par ledit adaptateur (30) d'une interface physique entre ledit dispositif de stockage de données externe (61) et ledit dispositif informatique (43, 44) cependant que ledit dispositif informatique (43, 44) est isolé dudit dispositif de stockage de données externe (61).

13. Méthode selon la revendication 12, comprenant en outre, dans ledit adaptateur (30) ; la détection que le dispositif de stockage de données (61) inséré dans ledit port (31) de l'adaptateur (30) est un dispositif privé ou un dispositif d'entreprise ; s'il s'agit d'un dispositif privé, le refus au dispositif de stockage de données (61) de l'accès à ce dispositif informatique (43, 44) ; et s'il s'agit d'un dispositif d'entreprise, la détermination que son contenu (615) a été vérifié, nettoyé et crypté par un dispositif de commande (11, 12, 13) et, le cas échéant, le décryptage du contenu dudit dispositif de stockage de données (61), ce qui permet ainsi audit dispositif informatique (43, 44) de lire ou d'exécuter ledit contenu (615c).
